(19) **Europäisches Patentamt**
**European Patent Office**
**Office européen des brevets**

(11) **EP 4 362 134 A1**

(12) **EUROPEAN PATENT APPLICATION**
published in accordance with Art. 153(4) EPC

(43) Date of publication:
**01.05.2024  Bulletin 2024/18**

(21) Application number: **22828814.8**

(22) Date of filing: **24.06.2022**

(51) International Patent Classification (IPC):
*H01M 4/36* (2006.01)           *H01M 4/38* (2006.01)
*H01M 4/48* (2010.01)           *H01M 4/58* (2010.01)
*H01M 4/583* (2010.01)          *H01M 4/587* (2010.01)
*H01M 4/62* (2006.01)           *H01M 10/052* (2010.01)

(52) Cooperative Patent Classification (CPC):
**H01M 4/36; H01M 4/38; H01M 4/48; H01M 4/58;**
**H01M 4/583; H01M 4/587; H01M 4/62;**
**H01M 10/052;** Y02E 60/10

(86) International application number:
**PCT/KR2022/009017**

(87) International publication number:
**WO 2022/270967 (29.12.2022 Gazette 2022/52)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **25.06.2021  KR 20210082927**

(71) Applicant: **Hansol Chemical Co., Ltd**
**Seoul 06169 (KR)**

(72) Inventors:
• **KWON, Se-Man**
**Wanju-gun, Jeollabuk-do 55321 (KR)**

• **HONG, Soon-Ho**
**Wanju-gun, Jeollabuk-do 55321 (KR)**
• **PARK, Byung-Hoon**
**Wanju-gun, Jeollabuk-do 55321 (KR)**
• **LEE, Jeong-Hun**
**Wanju-gun, Jeollabuk-do 55321 (KR)**
• **GONG, Min-Kyung**
**Wanju-gun, Jeollabuk-do 55321 (KR)**

(74) Representative: **Cabinet Laurent & Charras**
**Le Contemporain**
**50 Chemin de la Bruyère**
**69574 Dardilly Cedex (FR)**

(54) **ANODE ACTIVE MATERIAL, METHOD FOR PREPARING SAME, AND LITHIUM SECONDARY BATTERY COMPRISING SAME**

(57)     The present invention relates to an anode active material comprising a shell including metal particles coated in whole or in part with a metal carbide, a method for preparing same, and a lithium secondary battery comprising same.

**EP 4 362 134 A1**

**(Cont. next page)**

FIG. 1

## Description

### Technical Field

The present disclosure relates to an anode active material, a method for preparing the same, and a lithium secondary battery including the same, and specifically to an anode active material that improves battery life by introducing a metal particle in which a part or all of the surface thereof is coated with a metal carbide, a method for preparing the same, and a lithium secondary battery including the same.

### Background Art

Lithium-ion batteries (LIBs) have been adopted and used as the main power source for mobile electronic devices due to the high energy density thereof and ease of design. In addition, the application range thereof is expanding to electric vehicles or power storage devices for new renewable energy.

To be applied to new application fields, there is a demand for continuous research on LIB materials having properties including higher energy density and longer life.

In particular, in the case of anode materials, research has been conducted on various materials such as silicon, tin, and germanium in addition to carbon.

Among these, silicon-based anode materials have much higher energy density than currently available graphite anode materials and thus have received significant attention.

However, silicon-based anode materials have fatal disadvantages, such as deterioration in electrochemical properties due to the formation of an unstable SEI layer resulting from a side reaction between the surface of silicon and an electrolyte, grinding of electrode materials due to internal stress resulting from rapid volume expansion occurring during charging and discharging, and the like.

To solve such problems, a great deal of research has been conducted on improving battery characteristics through various surface treatments of silicon-based anode materials. In particular, research on a method for coating the surface with carbon materials or forming a composite is widely in progress.

However, there are still limitations in improving battery life. In addition, there is a need to develop technology for surface treatment of silicon-based anode active materials that prevents volume expansion of silicon-based anode materials while improving battery life.

[Document of related art]

[Patent Document]

   (Patent Document 1) Korean Patent Application Publication No. 2018-0002715
   (Patent Document 2) Korean Patent No. 10-1666878

## Disclosure

### Technical Problem

Hence, the problem that the present disclosure aims to solve is to provide an anode active material for a secondary battery having a long life, high capacity, and high energy density.

In addition, the present disclosure aims to provide a preparation method capable of preparing the anode active material with high efficiency at low costs.

Furthermore, the present disclosure aims to provide an electrode and a lithium secondary battery including the anode active material.

However, the problems to be solved by the present disclosure are not limited to the above description, and other problems can be clearly understood by those skilled in the art from the following description.

### Technical Solution

In one aspect of the present application, an anode active material containing a core and

   a shell surrounding the core,

in which the shell contains a metal particle in which a part or all of the surface is coated with a metal carbide, and in which the metal of the metal particle includes any one or more selected from the group consisting of Si, Al, Sn, Ge, Pb, In, As, Sb, P, and Ag, is provided.

In another aspect of the present application, a method for preparing an anode active material, the method including grinding a metal particle,

mixing the ground metal particle, amorphous carbon, and crystalline carbon for forming a composite, and performing heat treatment, in which the metal of the metal particle includes any one or more selected from the group consisting of Si, Al, Sn, Ge, Pb, In, As, Sb, P, and Ag, is provided.

In a further aspect of the present application, an electrode containing the anode active material is provided.

In yet another aspect of the present application, a lithium secondary battery including an anode containing the anode active material,

a cathode positioned while facing the anode, and an electrolyte positioned between the anode and the cathode is provided.

**Advantageous Effects**

An anode active material, according to the present disclosure, is capable of providing a long-life secondary battery having high capacity and high energy density.

In addition, the anode active material may be prepared with high efficiency at low costs.

**Description of Drawings**

FIG. 1 is a schematic diagram illustrating an anode active material having a core-shell structure according to one embodiment of the present disclosure;

FIG. 2 shows XRD and Raman spectra of anode active materials according to Examples 1 and 3 and Comparative Example 3 of the present disclosure;

FIG. 3 shows scanning electron microscopy (SEM) images of an anode active material according to Example 1 of the present disclosure; and

FIG. 4 shows energy dispersive X-ray spectroscopy (EDS) line scan analysis results for a cross section of an anode active material according to Example 1 of the present disclosure.

**Best Mode**

All terms including technical and scientific terms used herein have the same meaning as commonly understood by those skilled in the art to which the present disclosure belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

Therefore, the configuration of embodiments described herein are merely examples and do not exhaustively present the technical spirit of the present disclosure. Accordingly, it should be appreciated that there may be various equivalents and modifications that can replace the embodiments and the configurations at the time at which the present application is filed.

As used herein, the singular forms are intended to include the plural forms as well, unless the context clearly indicates otherwise. It will be further understood that the terms "comprise", "include", "have", and the like when used herein, specify the presence of stated features, integers, steps, components, or combinations thereof but do not preclude the presence or addition of one or more other features, integers, steps, components, or combinations thereof.

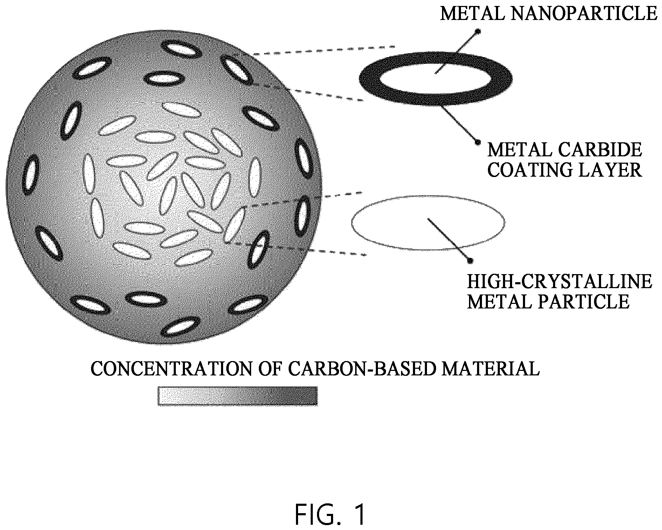

As illustrated in FIG. 1, an anode active material, according to one aspect of the present application, may contain a core and a shell surrounding the core, in which the shell contains a metal particle in which a part or all of the surface thereof is coated with a metal carbide, and the metal of the metal particle includes any one or more selected from the group consisting of Si, Al, Sn, Ge, Pb, In, As, Sb, P, and Ag.

The part or all of the surface of the metal particle in the anode active material may be coated with the metal carbide.

For example, 30% or more, 40% or more, 50% or more, 60% or more, 70% or more, 80% or more, 90% or more, and 100% of the total surface of the metal particle may be coated with the metal carbide. In addition, the degree of coating may be adjusted by varying process conditions when preparing the anode active material.

In one embodiment, the core of the anode active material may contain a metal particle, and the metal of the metal particle may include any one or more selected from the group consisting of Si, Al, Sn, Ge, Pb, In, As, Sb, P, and Ag.

In other words, the core of the anode active material may contain a metal particle whose surface is not coated with a metal carbide. In addition, the shell of the anode active material may contain the metal particle in which a part or all of the surface thereof is coated with the metal carbide.

The metal particle in which a part or all of the surface thereof is coated with the metal carbide may improve battery life stability.

In one embodiment, the metal particle may be a silicon particle, a silicon oxide particle, a silicon carbide particle, a silicon alloy particle, or a combination thereof.

The silicon-containing particles may be represented by Formula 1.

[Formula 1]        $SiO_x$ ($0 \leq x \leq 0.5$)

In Formula 1, when x exceeds 0.5, there may be a disadvantageous effect on battery capacity and efficiency. In other words, lithium ions react with oxygen and thus produce irreversible products such as $Li_2O$ and Li-silicate ($Li_xSi_yO_z$). As a result, the lithium ions that react with the anode material fail to return to an electrolyte or cathode material and are trapped inside the anode, thereby keeping capacity from being developed and reducing efficiency.

In addition, the silicon carbide may be, for example, SiC, and the silicon alloy may be, for example, a Si-Z alloy (where Z is one or more elements selected from among an alkali metal, an alkaline earth metal, an element in group 13, an element in group 14, a transition metal, a rare-earth element, and combinations thereof, but not Si).

The silicon-containing particle may have a median particle diameter (D50) of 50 to 1,000 nm, which is preferably in a range of 600 to 900 nm.

When the median particle diameter of the silicon-containing particle exceeds 1,000 nm, high battery capacity may be obtainable, but the battery life may be significantly shortened, and when the median particle diameter of the silicon-containing particle is smaller than 50 nm, the battery capacity and efficiency may be reduced, and manufacturing costs may increase.

In one embodiment, the metal particle may have a grain size of 5 to 50 nm, which is preferably in a range of 10 to 35 nm.

When the grain size of the metal particle exceeds 50 nm, manufacturing costs may increase, and life stability may be reduced, and when the grain size of the metal particle is smaller than 5 nm, battery capacity may be reduced.

In addition, the metal carbide may have a grain size of 1 to 50 nm, which is preferably in a range of 5 to 20 nm.

When the grain size of the metal carbide exceeds 50 nm, the battery capacity may be kept from being exhibited, and when the grain size of the metal carbide is smaller than 1 nm, the effect of improving battery life may be unlikely to be exhibited.

In one embodiment, a height ratio of a peak corresponding to the metal carbide to a peak corresponding to the metal (peak height corresponding to the metal carbide/peak height corresponding to the metal), obtained through XRD analysis performed on the anode active material, may be in a range of 0.01 to 0.55, which is preferably in a range of 0.01 to 0.2 and more preferably in a range of 0.02 to 0.1.

When the height ratio of the peak corresponding to the metal carbide to the peak corresponding to the metal exceeds 0.55, the capacity properties of the battery may be deteriorated, and when the height ratio of the peak corresponding to the metal carbide to the peak corresponding to the metal is lower than 0.01, the battery life may be shortened.

In one embodiment, a height ratio of a peak corresponding to amorphous carbon ($I_d$) to a peak corresponding to crystalline carbon ($I_g$) ($I_d/I_g$), obtained through Raman analysis performed on the anode active material, may be in a range of 0.1 to 1.8.

In addition, a height ratio of a peak corresponding to the metal carbide ($I_{metal\ carbide}$) to a peak corresponding to the metal ($I_{metal}$) ($I_{metal\ carbide}/I_{metal}$), obtained through Raman analysis performed on the anode active material, may be in a range of 0.01 to 0.2, which is preferably in a range of 0.05 to 0.1.

When the $I_{metal\ carbide}/I_{metal}$ exceeds 0.2, the capacity properties of the battery may be deteriorated, and when the $I_{metal\ carbide}/I_{metal}$ is lower than 0.01, the battery life may be shortened.

On the other hand, a height ratio of the peak corresponding to the metal carbide ($I_{metal\ carbide}$) to the peak corresponding to amorphous carbon ($I_d$) ($I_{metal\ carbide}/I_d$), obtained through the Raman analysis performed on the anode active material, may be in a range of 0.005 to 0.1, which is preferably in a range of 0.02 to 0.07.

When the $I_{metal\ carbide}/I_d$ exceeds 0.1, the capacity properties of the battery may be deteriorated, and when the $I_{metal\ carbide}/I_d$ is lower than 0.005, the battery life may be shortened.

In one embodiment, the shell may contain crystalline carbon.

In other words, the shell may be a carbon-based shell. In addition, the shell may be made mostly of crystalline carbon and may contain a small amount of amorphous carbon.

The carbon component of the carbon-based shell may perform a role of alleviating the volume expansion of the metal particle in which a part or all of the surface thereof is coated with the metal carbide during charging and discharging.

On the other hand, pores may be formed in the core of the anode active material, and internal pores in the core may reduce the initial irreversible capacity of the battery and help alleviate the volume expansion of Si.

The pores formed in the core may have a volume of 0.01 to 0.5 cc/g. The farther the distance away from the center of the core, the smaller the specific gravity of the pores may be.

A method for preparing an anode active material, according to another aspect of the present application, may include: grinding a metal particle; forming a composite by mixing the ground metal particle, amorphous carbon, and crystalline carbon; and performing heat treatment.

The metal of the metal particle may include any one or more selected from the group consisting of Si, Al, Sn, Ge, Pb, In, As, Sb, P, and Ag.

In other words, in the method for preparing the anode active material of the present application, steps of forming a metal carbide and applying the metal carbide are not additionally required. Instead, the metal particle is coated with the metal carbide through the forming of the composite and the performing of the heat treatment.

In one embodiment, the amorphous carbon may include any one or more selected from the group consisting of a coal-based pitch, a mesophase pitch, a petroleum-based pitch, tar, a coal-based oil, a petroleum-based heavy oil, an organic synthetic pitch, sucrose, a naphthalene resin, a polyvinyl alcohol resin, a furfuryl alcohol resin, a polyacrylonitrile resin, a polyamide resin, a phenolic resin, furan resin, a cellulose resin, a styrene resin, an epoxy resin or vinyl chloride resin, a block copolymer, a polyol, and a polyimide resin. In addition, the crystalline carbon may include any one or more selected from the group consisting of natural graphite, artificial graphite, expanded graphite, graphene, carbon black, and a fullerene.

Natural graphite is graphite that is produced naturally and examples thereof include flake graphite, high-crystalline graphite, amorphous graphite, and the like. Artificial graphite, which is artificially synthesized, is prepared by heating amorphous carbon to high temperatures, and examples thereof include primary graphite or electrographite, secondary graphite, graphite fiber, and the like.

Expanded graphite is obtained by intercalating chemical compounds, such as acids or alkalis, between layers of graphite and applying heat to expand the vertical layers of the molecular structure. Graphene includes a monolayer or a plurality of monolayer of graphite.

Carbon black, a crystalline material having less regularity than graphite, may be transformed into graphite when heated at a temperature of about 3,000°C for a long time. A fullerene is a carbon mixture containing at least 3 wt% of a fullerene, a compound having a polyhedral bundle-like form and containing 60 or more carbon atoms. The first carbon-based material may be used alone or in combination of two or more types of crystalline carbon. For example, natural graphite or artificial graphite may be used. The crystalline carbon may have a spherical, plate-like, fibrous, tubular, or powder form.

Preferably, a pitch may be used as the amorphous carbon. As the pitch, a pitch having a softening point of 100 to 250°C may be used. In particular, a petroleum-based or coal-based pitch containing a quinolone insoluble (QI) component in an amount of 5 wt% or less, more preferably, 1 wt% or less, may be used.

On the other hand, natural graphite may be preferably used as the crystalline carbon. As for the purity of the graphite, a high-purity grade containing a fixed carbon in an amount of 99 wt% or more, more preferably, 99.95 wt% or more, may be used.

In addition, flake graphite may be suitable for increasing conductivity by making contact with the metal particle.

In one embodiment, the forming of the composite may be performed by a physical method.

The physical method may include any one or more selected from the group consisting of milling, a high-energy process, stirring, mixing, compression, and the like.

For example, the forming of the composite may be performed by ball milling. In particular, a planetary ball mill may efficiently mix and grind the resulting mixture by rotation and revolution without making contact with a composition.

Examples of a ball applicable to ball milling may include a zirconia ball and the like. There is no limitation in the type of ball, and the ball may have, for example, a size of about 0.3 to 10 mm, but is not limited thereto.

On the other hand, the forming of the composite may be performed under conditions in which a reaction time is in a range of 1 minute to 24 hours, a reaction temperature is in a range of 40 to 250°C, and a reaction atmosphere is atmospheric or inert.

In addition, the heat treatment may be performed at a temperature of 970°C or higher, which is preferably 1,400°C or lower.

The heat treatment time is not particularly limited. However, the heat treatment may be, for example, performed for 10 minutes to 5 hours.

An electrode, according to a further aspect of the present disclosure, may contain the anode active material. In addition, a lithium secondary battery may include an electrode containing the anode active material as an anode, a cathode positioned while facing the anode; and an electrolyte positioned between the anode and the cathode.

The anode may contain the anode active material and be, for example, prepared by a method of mixing the anode active material, a binder, and, optionally, a conductive additive in a solvent to prepare an anode active material composition and then shaping the composition into a predetermined form or applying the composition on a current collector such as copper foil and the like.

In addition to the anode active material described above, the anode may further contain an anode active material commonly used as an anode active material for lithium batteries in the art. Examples of the commonly used anode active material may include any one or more selected from the group consisting of lithium metal, a metal capable of forming an alloy with lithium, a transition metal oxide, a non-transition metal oxide, and a carbon-based material.

Examples of the metal capable of forming an alloy with lithium may include Si, Sn, Al, Ge, Pb, Bi, Sb a Si-Y alloy (where Y is an alkali metal, an alkaline earth metal, an element in group 13, an element in group 14, a transition metal, a rare-earth element, or a combination thereof, but not Si), a Sn-Y alloy (where Y is an alkali metal, an alkaline earth metal, an element in groups 13 to 16, a transition metal, a rare-earth element, or a combination thereof, but not Sn), and the like. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

Examples of the transition metal oxide may include lithium titanium oxide, vanadium oxide, lithium vanadium oxide, and the like.

Examples of the non-transition metal oxide may include $SnO_2$, $SiOx$ ($0 < x \le 2$), and the like. The carbon-based material may be crystalline carbon, amorphous carbon, or a mixture thereof. The crystalline carbon may be graphite such as amorphous, plate-like, flake, spherical, or fibrous natural graphite or artificial graphite. In addition, the amorphous carbon may be soft carbon (low-temperature sintered carbon) or hard carbon, mesophase pitch carbide, calcined coke, and the like.

When using both the anode active material and the carbon-based material, the oxidation reaction of the silicon-based active material may be prevented from occurring, and the SEI film may be effectively formed. As a result, a stable film is formed, and improved electrical conductivity is obtained, thereby further improving the charge and discharge properties of lithium.

A typical anode active material may be blended with the anode active material described above through mixing, applied on the surface of the anode active material, or used in any other combination form.

The binder used in the anode active material composition, which is a component that assists the binding between the anode active material and the conductive additive and the binding between the anode active material and the current collector, is added in an amount of 1 to 50 parts by weight based on 100 parts by weight of the anode active material. For example, the binder may be added in an amount in a range of 1 to 30 parts by weight, 1 to 20 parts by weight, or 1 to 15 parts by weight, based on 100 parts by weight of the anode active material.

Examples of the binder may include polyvinylidene fluorides, polyvinylidene chlorides, polybenzimidazoles, polyimides, polyvinyl acetates, polyacrylonitriles, polyvinyl alcohols, carboxymethylcellulose (CMC), starch, hydroxypropyl cellulose, regenerated cellulose, polyvinylpyrrolidones, tetrafluoroethylene, polyethylenes, polypropylenes, polystyrenes, polymethyl methacrylates, polyanilines, acrylonitrile butadiene styrene, phenolic resins, epoxy resins, polyethylene terephthalates, polytetrafluoroethylenes, polyphenylsulfides, polyamideimides, polyetherimides, polyethylene sulfones, polyamides, polyacetals, polyphenylene oxides, polybutylene terephthalate, ethylene-propylene-diene terpolymer (EPDM), sulfonated EPDM, styrene-butadiene rubber, fluorine rubber, various copolymers, and the like.

The anode may further contain the conductive additive optionally to further improve electrical conductivity by providing a conductive path to the anode active material.

As the conductive additive, any material generally applicable to lithium batteries may be used. In addition, examples of the conductive additive used may include: carbon-based material such as carbon black, acetylene black, Ketjen black, and carbon fiber (for example, vapor-grown carbon fiber); metallic material such as metal powders or metal fibers of copper, nickel, aluminum, silver and the like; and conductive materials containing conductive polymers, such as polyphenylene derivatives, or a mixture thereof. The amount of the conductive additive used may be appropriately adjusted. For example, the anode active material and the conductive additive may be added in a weight ratio in a range of 99:1 to 90:10.

As the solvent, N-methylpyrrolidone (NMP), acetone, water, and the like may be used. The solvent is used in an amount of 1 to 10 parts by weight based on 100 parts by weight of the anode active material. When the amount of the solvent content falls within the above range, an operation for forming an active material layer may be performed with ease.

In addition, the current collector is typically prepared to a thickness of 3 to 500 $\mu$m. Any conductive current collector that does not cause chemical changes in the battery may be used without limitation, and examples thereof may include copper, stainless steel, aluminum, nickel, titanium, sintered carbon, copper or stainless steel whose surface is treated with carbon, nickel, titanium, silver, and the like, aluminum-cadmium alloy, and the like.

In addition, the current collector may form fine projections on the surface thereof to strengthen the bonding strength of the anode active material and may be used in various forms such as films, sheets, foils, nets, porous materials, foams, non-woven fabrics, and the like.

An anode plate may be manufactured by coating the upper portion of the current collector directly with the prepared anode active material composition or may be obtained by casting the prepared anode active material composition on a separate support and laminating an anode active material film detached from the support on a copper foil current collector. The anode is not limited to the forms listed above and may have forms other than those listed above.

The anode active material composition may be used not only to manufacture electrodes for lithium secondary batteries but also to manufacture printable batteries by being printed on flexible electrode substrates.

Separately, to manufacture the cathode, a cathode active material composition in which a cathode active material, a conductive additive, a binder, and a solvent are mixed is prepared.

The cathode active material is a lithium-containing metal oxide, and any material commonly used in the art may be used.

For example, a compound represented by one formula among $Li_aA_{1-b}B_bD_2$ (where in the formula, $0.90 \leq a \leq 1.8$, and $0 \leq b \leq 0.5$); $Ei_aE_{1-b}B_bO_{2-c}D_c$ (where in the formula, $0.90 \leq a \leq 1.8$, $0 \leq b \leq 0.5$, and $0 \leq c \leq 0.05$); $LiE_{2-b}B_bO_{4-c}D_c$ (where in the formula, $0 \leq b \leq 0.5$, and $0 \leq c \leq 0.05$); $Li_aNi_{1-bc}Co_bB_cD_a$ (where in the formula, $0.90 \leq a \leq 1.8$, $0 \leq b \leq 0.5$, $0 \leq c \leq 0.05$, and $0 < a \leq 2$); $Li_aNi_{1-bc}Co_bB_cO_{2-a}F_a$ (where in the formula, $0.90 \leq a \leq 1.8$, $0 \leq b \leq 0.5$, $0 \leq c \leq 0.05$, and $0 < \alpha < 2$); $Li_aNi_{1-bc}Co_bB_cO_{2-a}F_a$ (where in the formula, $0.90 \leq a \leq 1.8$, $0 \leq b \leq 0.5$, $0 \leq c \leq 0.05$, and $0 < \alpha < 2$); $Li_aNi_{1-bc}Mn_bB_cD_\alpha$ (where in the formula, $0.90 \leq a \leq 1.8$, $0 \leq b \leq 0.5$, $0 \leq c \leq 0.05$, and $0 < \alpha \leq 2$); $Li_aNi_{1-bc}Mn_bB_cO_{2-a}F_a$ (where in the formula, $0.90 \leq a \leq 1.8$, $0 \leq b \leq 0.5$, $0 \leq c < 0.05$, and $0 < \alpha < 2$); $Li_aNi_{1-bc}Mn_bB_cO_{2-a}F_a$ (where in the formula, $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$); $Li_aNi_bCo_cMn_dGeO_2$ (where in the formula, $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (where in the formula, $0.90 \leq a \leq 1.8$, and $0.001 \leq b \leq 0.1$); $Li_aCoG_bO_2$ (where in the formula, $0.90 \leq a \leq 1.8$, and $0.001 \leq b \leq 0.1$); $Li_aMnG_bO_2$ (where in the formula, $0.90 \leq a \leq 1.8$, and $0.001 \leq b \leq 0.1$); $Li_aMn_2G_bO_4$ (where in the formula, $0.90 \leq a \leq 1.8$, and $0.001 \leq b \leq 0.1$); $QOz$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$ may be used.

In the formulas, A is Ni, Co, Mn, or a combination thereof; B is Al, Ni, Co, Mn, Cr, Fe, Mg, Sr, V, a rare-earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

There is no doubt that the compound with a coating layer on the surface thereof may be used, or a mixture of the compound and the compound with a coating layer may be used. The coating layer may contain a compound of a coating element, such as an oxide of the coating element, a hydroxide, an oxyhydroxide of the coating element, an oxycarbonate of the coating element, or a hydroxycarbonate of the coating element. The compound constituting these coating layers may be amorphous or crystalline. As the coating element contained in the coating layer, Mg, Al, Co, K, Na, Ca, Si, Ti, V, Sn, Ge, Ga, B, As, Zr, or a mixture thereof may be used. For a coating layer formation process, any coating method that enables coating using such elements with the compound without adversely affecting the physical properties of the cathode active material may be used without limitation. Since this method is well-understood by those skilled in art, detailed descriptions will be omitted.

For example, $LiNiOz$, $LiCoOz$, $LiMn_xO_{2x}$ ($x = 1, 2$), $LiNi_{1-x}Mn_xO_2$ ($0 < x < 1$), $LiNi_{1-xy}Co_xMn_yO_2$ ($0 \leq x \leq 0.5$, and $0 \leq y \leq 0.5$), $LiFeO_2$, $V_2O_5$, TiS, MoS, and the like may be used.

In the cathode active material composition, the conductive additive, the binder, and the solvent may be the same as those in the anode active material composition described above. In some cases, a plasticizer may be further added to the cathode active material composition and the anode active material composition to form pores inside the electrode plate. The cathode active material, the conductive additive, the binder, and the solvent are contained in amounts at levels commonly used in lithium batteries.

The cathode current collector has a thickness of 3 to 500 $\mu$m, and any cathode current collector having high conductivity that does not cause chemical changes in the battery may be used without particular limitation. Examples thereof used may include stainless steel, aluminum, nickel, titanium, sintered carbon, or aluminum or stainless steel whose surface is treated with carbon, nickel, titanium, silver, and the like. The current collector may form fine projections on the surface thereof to enhance the adhesive strength of the cathode active material and may be used in various forms such as films, sheets, foils, nets, porous materials, foams, non-woven fabrics, and the like.

A cathode plate may be prepared by coating the current collector directly with the prepared cathode active material composition and then drying the resulting product. Alternatively, the cathode plate may be manufactured by casting the cathode active material composition on a separate support and then laminating a film obtained by being detached from the support on the cathode current collector.

The cathode and the anode may be separated by a separator, and any separator commonly used in lithium batteries may be used. In particular, any separator that has low resistance to ion movement in the electrolyte and has excellent electrolytic solution-retaining capability is suitable. For example, the separator may be made of a material selected from among glass fiber, polyester, Teflon, polyethylene, polypropylene, polytetrafluoroethylene (PTFE), and combinations thereof and have a form of non-woven or woven fabric. The separator used has a pore diameter of 0.01 to 10 $\mu$m and typically has a thickness of 5 to 300 $\mu$m.

A lithium salt-containing non-aqueous electrolyte is made of a non-aqueous electrolyte and lithium. As the non-aqueous electrolyte, a non-aqueous electrolyte solution, a solid electrolyte, an inorganic solid electrolyte, and the like are used.

Examples of the non-aqueous electrolyte solution used may include aprotic organic solvents, such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, 1,3-dioxolane, formamide, dimethylformamide, acetonitrile, nitromethane, methyl formate, methyl acetate, triethyl phosphate, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, and the like.

Examples of the organic solid electrolyte used may include polyethylene derivatives, polyethylene oxide derivatives, polypropylene oxide derivatives, phosphoric acid ester polymers, poly agitation lysine, polyester sulfides, polyvinyl alcohols, polyvinylidene fluorides, polymers containing ionic dissociation groups, and the like.

Examples of the inorganic solid electrolyte used may include nitrides, halides, sulfates, and the like of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, and the like.

Any lithium salt commonly used in lithium batteries may be used without limitation. As the lithium salt, a material easily soluble in the non-aqueous electrolyte, one or more materials, such as LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, lithium chloroborate, lower aliphatic lithium carbonate, lithium tetraphenylborate, or imide, may be used.

Lithium secondary batteries may be classified into lithium-ion batteries, lithium-ion polymer batteries, and lithium polymer batteries depending on the types of separator and electrolyte used, may be classified into a cylinder type, a prism type, a coin type, a pouch type, and the like depending on the forms, and may be divided into a bulk type and a thin-film type depending on the size.

Since a method for manufacturing these batteries is widely known in the art, detailed descriptions are omitted.

**Mode for Invention**

Hereinafter, the present application will be described in more detail using examples and comparative examples, but the present application is not limited thereto.

**[Example 1]**

Of 100 parts by weight of the total amount of a mixture, 35 parts by weight of silicon (Si, $D_{50}$: 809 nm), 40 parts by weight of pitch-based carbon, and 25 parts by weight of flake graphite were mixed, and dry milling was performed at 2,000 rpm for 3 minutes. Then, heat treatment was performed at a temperature of about 1,150°C for 4 hours in an argon (Ar) gas atmosphere to prepare an anode active material.

**[Example 2]**

An anode active material was prepared in the same manner as in Example 1, except for using silicon having a median particle diameter (D50) of 107 nm.

**[Example 3]**

An anode active material was prepared in the same manner as in Example 1, except for performing the heat treatment at a temperature of 1,250°C.

**[Example 4]**

An anode active material was prepared in the same manner as in Example 1, except for performing the heat treatment for 1 hour.

**[Example 5]**

An anode active material was prepared in the same manner as in Example 1, except for performing the heat treatment for 8 hours.

**[Comparative Example 1]**

An anode active material was prepared in the same manner as in Example 1, except for mixing the silicon and the flake graphite in a weight ratio of 35:65.

**[Comparative Example 2]**

An anode active material was prepared in the same manner as in Example 1, except for mixing the silicon and the pitch-based carbon in a weight ratio of 35:65.

**[Comparative Example 3]**

An anode active material was prepared in the same manner as in Example 1, except for performing the heat treatment at a temperature of 950°C.

**[Comparative Example 4]**

An anode active material was prepared in the same manner as in Example 1, except for using silicon having a median particle diameter (D50) of 1.06 μm.

**[Comparative Example 5]**

An anode active material was prepared in the same manner as in Example 1, except for mixing the silicon (Si, $D_{50}$: 809 nm), the pitch-based carbon, and the flake graphite in amounts of 35 parts by weight, 15 parts by weight, and 55 parts by weight, respectively.

**[Comparative Example 6]**

An anode active material was prepared in the same manner as in Example 1, except for mixing the silicon (Si, $D_{50}$: 809 nm), the pitch-based carbon, and the flake graphite in amounts of 35 parts by weight, 55 parts by weight, and 10 parts by weight, respectively.

Table 1 below shows silicon particle sizes, mixing ratios of the respective components, and heat treatment conditions in Examples 1 to 5 and Comparative Examples 1 to 6.

[Table 1]

| | Silicon particle size ($D_{50}$, nm) | Silicon:pitch:graphite (parts by weight) | Heat treatment temperature (°C)/ time (hours) |
|---|---|---|---|
| Example 1 | 809 | 35:40:25 | 1150°C/ 4 hours |
| Example 2 | 107 | 35:40:25 | 1150°C/ 4 hours |
| Example 3 | 798 | 35:40:25 | 1250°C/ 4 hours |
| Example 4 | 800 | 35:40:25 | 1150°C/ 1 hour |
| Example 5 | 802 | 35:40:25 | 1150°C/ 8 hours |
| Comparative Example 1 | 821 | 35:0:65 | 1150°C/4 hours |
| Comparative Example 2 | 816 | 35:65:0 | 1150°C/4 hours |

(continued)

|  | Silicon particle size ($D_{50}$, nm) | Silicon:pitch:graphite (parts by weight) | Heat treatment temperature (°C)/ time (hours) |
| --- | --- | --- | --- |
| Comparative Example 3 | 811 | 35:40:25 | 950°C/ 4 hours |
| Comparative Example 4 | 1060 | 35:40:25 | 1150°C/4 hours |
| Comparative Example 5 | 797 | 35:15:55 | 1150°C/4 hours |
| Comparative Example 6 | 805 | 35:55:10 | 1150°C/4 hours |

**[Preparation Example]**

Manufacturing of half-coin cell

An anode slurry was prepared by evenly mixing each anode active material, prepared in Examples 1 to 5 and Comparative Examples 1 to 4, a conductive additive (Super P), and a binder (SBR-CMC) in a weight ratio of 93:3:4.

A copper foil current collector having a thickness of 20 $\mu$m was coated with the prepared anode slurry. Next, the coated electrode plate was dried at a temperature of 120°C for 30 minutes and then pressed to manufacture an anode.

A CR2032-type half-coin cell was manufactured by using the anode, metal lithium as a counter electrode, a PE separator as a separator, and 1.0 M LiPF6 dissolved in a mixed solvent of ethylene carbonate (EC):diethyl carbonate (DEC):dimethyl carbonate (DMC) (in a volume ratio of 3:5:2) as an electrolyte.

Manufacturing of full-coin cell

The anode used in the half-coin cell was used, and a cathode was manufactured as follows. $LiNi_{0.6}Co_{0.2}Mn_{0.2}O_2$, serving as a cathode active material, and PVA-PAA, serving as a binder, were mixed in a weight ratio of 1:1 to prepare a cathode slurry, followed by coating an aluminum foil current collector having a thickness of 12 $\mu$m with the cathode slurry. Next, the coated electrode plate was dried at a temperature of 120°C for 15 minutes and then pressed to manufacture the cathode.

A CR2032-type full-coin cell was manufactured by using the manufactured anode and cathode, a PE separator as a separator, and 1.5 M LiPF6 dissolved in a FEC 20% mixed solvent of ethylene carbonate (EC):diethyl carbonate (DEC):dimethyl carbonate (DMC) (in a volume ratio of 2:1:7) as an electrolyte.

**Evaluation Example 1: XRD, Raman, and porosity analysis**

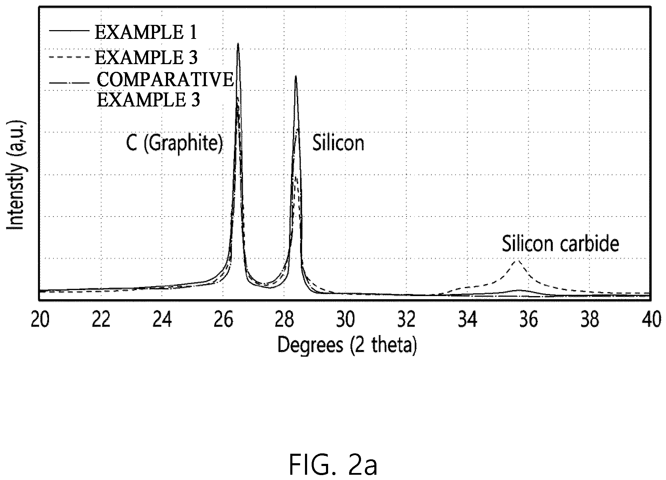

An X-ray diffraction (XRD) test was performed on the anode active materials prepared in Examples 1 and 3 and Comparative Example 3. The results thereof are shown in FIG. 2A. XRD was measured using the Cu-K$\alpha$ line.

As shown in FIG. 2A, in the case of the anode active materials prepared in Examples 1 and 3, a peak corresponding to carbon (around 26°) and a peak corresponding to silicon carbide (around 36°) were measured. A peak corresponding to silicon (around 26°) was also measured. However, in the case of the anode active material prepared in Comparative Example 3, a peak corresponding to silicon carbide failed to be measured.

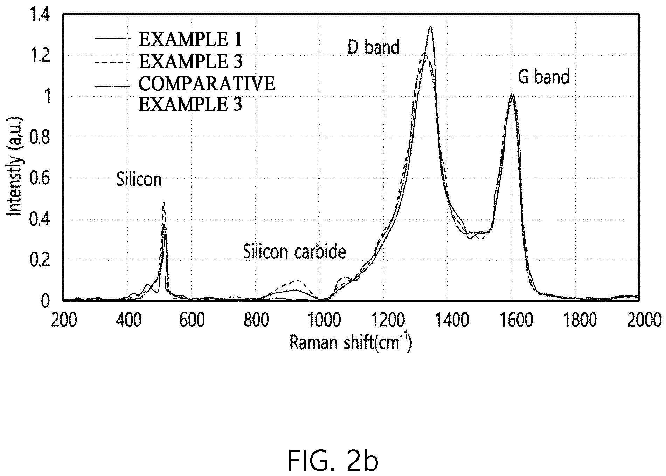

In addition, the anode active materials prepared in Examples 1 and 3 and Comparative Example 3 were analyzed using a LabRam HR Evolution Raman spectrometer (Horiba Jobin-Yvon, France). The results thereof are shown in FIG. 2B.

An Ar+ ion laser functioning at a power of 10 mW with an excitation wavelength of 514 nm was used in the Raman system.

As shown in FIG. 2B, a peak corresponding to silicon (around 500 cm$^{-1}$) and peaks corresponding to the D band (around 1320 cm$^{-1}$) and G band (around 1600 cm$^{-1}$) of carbon were each independently confirmed.

In addition, in the case of the anode active materials prepared in Examples 1 and 3, a peak (around 900 cm$^{-1}$) corresponding to silicon carbide was confirmed. However, in the case of the anode active material prepared in Comparative Example 3, a peak corresponding to silicon carbide failed to be measured.

Through XRD and Raman analysis, it was confirmed that the anode active material of the present application contained silicon, silicon carbide, and carbon.

Porosity (porosity of the core portion) was calculated using Equation 1 below. In Equation 1 below, the true density was 2.33 g/cc.

In addition, the total pore volume in Equation 1 below was measured using a TriStar II 3020 instrument purchased from Micromeritics. The total pore volume was measured through the adsorption amount of nitrogen gas depending on changes in relative pressures at the liquid nitrogen temperature (77 K).

<Equation 1>

$$porosity\ (\%) = \frac{total\ pore\ volume\ (cc/g)}{\frac{1}{(true\ density\ (g/cc))} + total\ pore\ volume}$$

Table 2 below shows a height ratio of the peak of silicon carbide (SiC) to the peak of silicon (Si), based on the XRD measurement results of the anode active materials prepared in Examples 1 to 5 and Comparative Examples 1 to 6, and a height ratio of the peak corresponding to amorphous carbon ($I_d$) to the peak corresponding to crystalline carbon ($I_g$) and a height ratio of the peak of silicon carbide ($I_{sic}$) to the peak corresponding to amorphous carbon ($I_d$), based on the Raman measurement results.

In addition, the porosity calculated by Equation 1 above is shown in Table 2 below.

[Table 2]

|  | XRD ratio (SiC/Si) | Raman ($I_d/I_g$) | Raman ($I_{SiC}/I_d$) | Porosity (%) |
|---|---|---|---|---|
| Example 1 | 2.19 | 1.10 | 0.059 | 29.5 |
| Example 2 | 7.21 | 1.13 | 0.061 | 41.1 |
| Example 3 | 50.51 | 0.92 | 0.091 | 28.4 |
| Example 4 | 1.44 | 1.07 | 0.037 | 17.3 |
| Example 5 | 13.01 | 1.11 | 0.066 | 21.9 |
| Comparative Example 1 | - | 0.41 | - | 47.0 |
| Comparative Example 2 | 16.81% | 2.33 | 0.012 | 17.3 |
| Comparative Example 3 | - | 1.24 | - | 33.9 |
| Comparative Example 4 | 1.53 | 1.11 | 0.058 | 15.7 |
| Comparative Example 5 | 1.01 | 0.56 | 0.049 | 27.2 |
| Comparative Example 6 | 2.03 | 1.78 | 0.008 | 40.3 |

In the case of Comparative Example 1, using only flake graphite, and Comparative Example 3, in which the heat treatment was performed at a lower temperature of 950°C, it was confirmed that silicon carbide failed to be formed.

**Evaluation Example 2: SEM analysis**

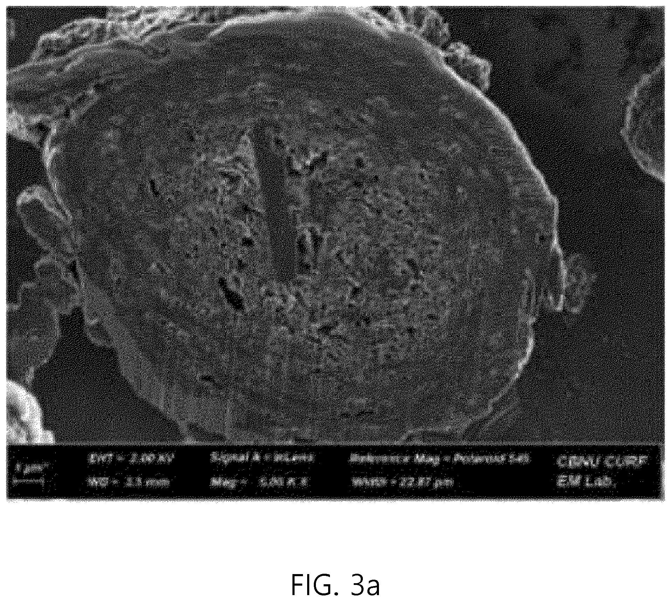

FIG. 3A shows the scanning electron microscopy (SEM) analysis results for a cross section of the anode active material prepared in Example 1.

Referring to FIG. 3A, it was confirmed that a core and a shell of the anode active material were well distinguishable.

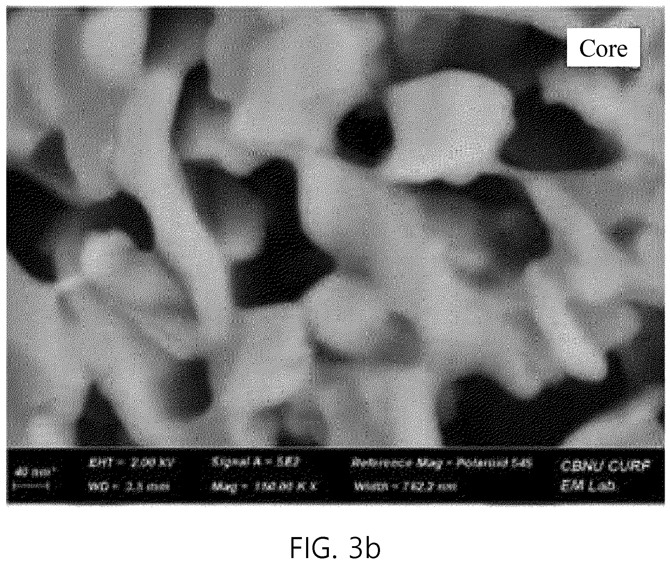

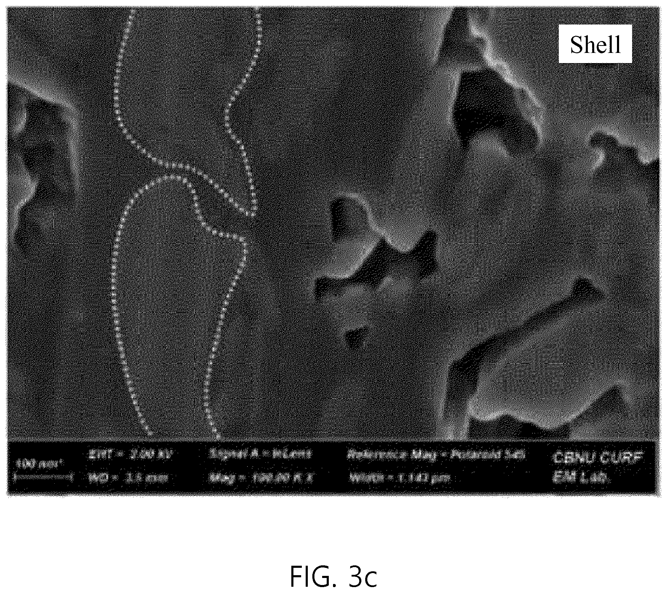

In addition, as a result of analyzing each of the core and the shell at higher magnifications, the core (FIG. 3B) containing silicon particles and the carbon-based shell (FIG. 3C) containing silicon particles in which the surface thereof was coated with silicon carbide (SiC) were confirmed.

On the other hand, as a result of the SEM analysis, it was confirmed that the anode active materials prepared in Comparative Examples 1 and 2 failed to form a core-shell structure of the present application.

**Evaluation Example 3: FIB-EDS analysis**

The anode active material prepared in Example 1 was sampled by FIB (Nova200 manufactured by FEI), and EDS line scan analysis was performed using STEM-EDS (JEOL-2200FS manufactured by JEOL) under the condition of an acceleration voltage of 200 kV.

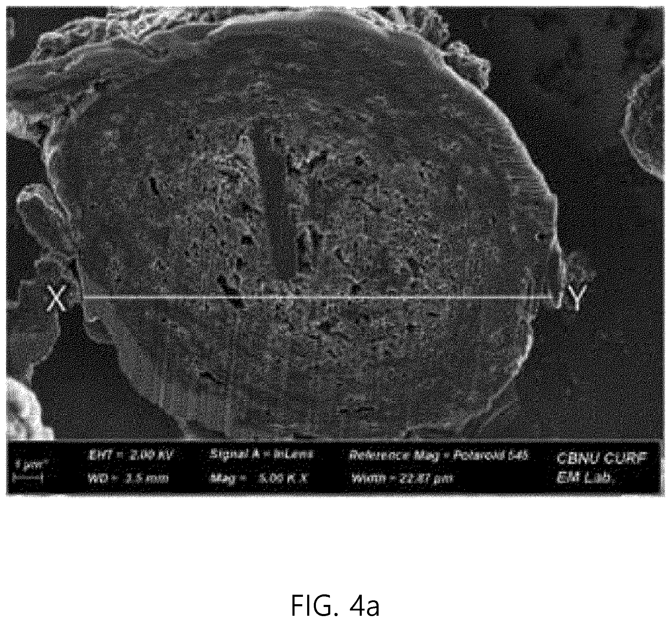

As shown in FIG. 4A, a concentration ratio of carbon, silicon, and oxygen in the core and the shell was analyzed by the EDS line scan performed along the XY line corresponding to the horizontal axis of the cross section of the anode active material prepared in Example 1.

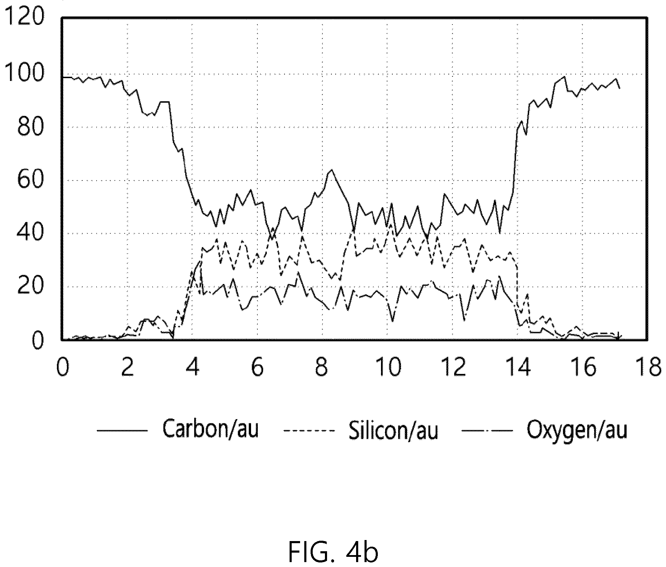

As a result of the analysis, as shown in FIG. 4B, the concentrations of silicon and oxygen were measured to be relatively higher in the core than in the shell, and the concentration of carbon was measured to be higher in the shell than in the core.

In other words, through the EDS line scan analysis, the core and shell components in the anode active material having the core-shell structure of the present application were specifically confirmed.

## Evaluation Example 4: Evaluation of battery characteristics

The battery characteristics of the half-coin cells and full-coin cells manufactured using the anode active materials, prepared in Examples 1 to 5 and Comparative Examples 1 to 4, were evaluated as follows.

In the case of Comparative Examples 5 and 6, a large number of coarse particles of carbon were generated during the manufacturing process, which was unsuitable for measuring the battery characteristics, so the measurement of battery characteristics was not performed.

The full-coin cells were used to evaluate life characteristics, and the half-coin cells were used to evaluate other battery characteristics.

Constant-current charging was performed on each half-coin cell manufactured using the anode active materials, prepared in Examples 1 to 5 and Comparative Examples 1 to 4, at a temperature of 25°C at a current rate of 0.1 C until the voltage level reached 0.01 V (vs. Li). Then, while maintaining the voltage level of 0.01 V, constant-voltage charging was performed until the current rate reached 0.05 C. After putting the fully charged cell to rest for 10 minutes, constant-current discharging at a current rate of 0.1 C was performed until the voltage level reached 1.5 V (vs. Li) (performed twice, initial formation). The "C", the discharge rate of the cell, means a value obtained by dividing the total capacity of the cell by the total discharge time.

In addition, constant-current charging was performed on each full-coin cell manufactured using the anode active materials prepared in Examples 1 to 5 and Comparative Examples 1 to 4 at a temperature of 25°C at a current rate of 0.1 C until the voltage level reached 4.2 V (vs. Li). Then, while maintaining the voltage level of 4.2 V, constant-voltage charging was performed until the current rate reached 0.05 C. After putting the fully charged cell to rest for 10 minutes, constant-current discharging at a current rate of 0.1 C was performed until the voltage level reached 2.7 V (vs. Li) (performed twice, initial formation).

Next, constant-current charging was performed on the cell at a temperature of 25°C with a current rate of 1.0 C at a voltage level of 4.2 V (vs. Li). Then, while maintaining the voltage level of 4.2 V, constant-voltage charging was performed until the current rate reached 0.05 C. After putting the fully charged coin cell to rest for 10 minutes, a cycle of constant-current discharging at a current rate of 0.1 C was repeatedly performed until the voltage level reached 2.7 V (vs. Li) (first to 100th cycles).

Table 3 below shows the measured initial charge capacity, initial discharge capacity, initial efficiency, and life characteristics of the cells using the anode active materials prepared in Examples 1 to 5 and Comparative Examples 1 to 4.

The initial charge capacity and the initial discharge capacity represent the charge and discharge capacity at the first cycle.

The initial efficiency and life characteristics were calculated from Equations 2 and 3 below, respectively.

$$\text{Initial efficiency [\%]} = [\text{Discharge capacity at first cycle/Charge capacity at first cycle}] \times 100 \qquad \text{<Equation 2>}$$

$$\text{Life characteristics [\%]} = [\text{Discharge capacity at 100th cycle/Discharge capacity at first cycle}] \times 100 \qquad \text{<Equation 3>}$$

[Table 3]

| | Initial charge capacity (mAh/g) | Initial discharge capacity (mAh/g) | Initial efficiency (%) | Life characteristics (% at 100th) |
|---|---|---|---|---|
| Example 1 | 1178.3 | 1010.7 | 85.5 | 84.9 |
| Example 2 | 1002.8 | 843.6 | 84.1 | 87.6 |

(continued)

| | Initial charge capacity (mAh/g) | Initial discharge capacity (mAh/g) | Initial efficiency (%) | Life characteristics (% at 100th) |
|---|---|---|---|---|
| Example 3 | 779.5 | 667.2 | 85.1 | 94.4 |
| Example 4 | 1302.1 | 1171.5 | 90.0 | 80.7 |
| Example 5 | 1146.0 | 1019.8 | 89.0 | 79.5 |
| Comparative Example 1 | 1420.6 | 1286.8 | 90.6 | 74.3 |
| Comparative Example 2 | 1397.2 | 1185.9 | 84.9 | 76.7 |
| Comparative Example 3 | 1457.6 | 1271.1 | 87.2 | 78.0 |
| Comparative Example 4 | 1383.5 | 1235.8 | 89.3 | 70.1 |

It was confirmed that Examples 1 to 5 exhibited particularly excellent battery life characteristics compared to Comparative Examples 1 to 4.

In other words, when comparing examples with Comparative Example 1, in which both the core-shell structure and SiC were not formed, Comparative Example 2, in which the core-shell structure was not formed while forming SiC, and Comparative Example 3, in which the core-shell structure was formed while not forming SiC, it was confirmed that the life characteristics of the batteries to which the anode active materials of examples were applied were superior to those of the batteries to which the anode active materials of Comparative Examples 1 to 3 were applied.

In addition, it was confirmed that the life characteristics of the batteries to which the anode active materials of examples were applied were superior to those of the battery to which the anode active material of Comparative Example 4, in which the silicon had a particle size exceeding 1 μm, was applied.

In other words, the anode active material having the core-shell structure of the present application and containing the metal particle (Si) in which the surface thereof is coated with the metal carbide (SiC) in the shell exhibited better battery life characteristics than the anode active material not having the core-shell structure or not containing the metal particle (Si) in which the surface thereof is coated with the metal carbide (SiC).

The scope of the present disclosure is defined by the appended claims rather than the detailed description presented above. All changes or modifications derived from the meaning and scope of the claims and the concept of equivalents should be construed to fall within the scope of the present disclosure.

**Industrial Applicability**

An anode active material, according to the present disclosure, is capable of providing a long-life secondary battery having high capacity and high energy density.

In addition, the anode active material may be prepared with high efficiency at low costs.

**Claims**

1. An anode active material comprising:

   a core; and
   a shell surrounding the core,
   wherein the shell comprises a metal particle in which a part or all of the surface thereof is coated with a metal carbide, and
   the metal of the metal particle comprises any one or more selected from the group consisting of Si, Al, Sn, Ge, Pb, In, As, Sb, P, and Ag.

2. The anode active material of claim 1, wherein the core comprises a metal particle, and
   the metal of the metal particle comprises any one or more selected from the group consisting of Si, Al, Sn, Ge, Pb, In, As, Sb, P, and Ag.

3. The anode active material of claim 1, wherein the metal particle comprises any one or more selected from the group consisting of a silicon particle, a silicon oxide particle, and a silicon alloy particle.

4. The anode active material of claim 1, wherein the metal particle has a median particle diameter (D50) of 50 to 1,000 nm, and
the metal particle is represented by Formula 1.

[Formula 1]     $SiO_x$ $(0 \leq x \leq 0.5)$

5. The anode active material of claim 1, wherein the metal particle has a grain size of 5 to 50 nm.

6. The anode active material of claim 1, wherein the metal carbide has a grain size of 1 to 50 nm.

7. The anode active material of claim 1, wherein a height ratio of a peak corresponding to the metal carbide to a peak corresponding to the metal (a peak height corresponding to the metal carbide/a peak height corresponding to the metal), obtained through XRD analysis, is in a range of 0.01 to 0.55.

8. The anode active material of claim 1, wherein a height ratio of a peak corresponding to amorphous carbon ($I_d$) to a peak corresponding to crystalline carbon ($I_g$) ($I_d/I_g$), obtained through Raman analysis, is in a range of 0.1 to 1.8.

9. The anode active material of claim 1, wherein a height ratio of a peak corresponding to the metal carbide ($I_{metal\ carbide}$) to a peak corresponding to the metal ($I_{metal}$) ($I_{metal\ carbide}/I_{metal}$), obtained through Raman analysis, is in a range of 0.01 to 0.2.

10. The anode active material of claim 1, wherein a height ratio of a peak corresponding to the metal carbide ($I_{metal\ carbide}$) to a peak corresponding to amorphous carbon ($I_d$) ($I_{metal\ carbide}/I_d$), obtained through Raman analysis, is in a range of 0.001 to 0.1.

11. The anode active material of claim 1, wherein the shell comprises crystalline carbon.

12. A method for preparing an anode active material, the method comprising:

grinding a metal particle;
forming a composite by mixing the ground metal particle, amorphous carbon, and crystalline carbon; and
performing heat treatment,
wherein the metal of the metal particle comprises any one or more selected from the group consisting of Si, Al, Sn, Ge, Pb, In, As, Sb, P, and Ag.

13. The method of claim 12, wherein the amorphous carbon comprises any one or more selected from the group consisting of a coal-based pitch, a mesophase pitch, a petroleum-based pitch, tar, a coal-based oil, a petroleum-based heavy oil, an organic synthetic pitch, sucrose, a naphthalene resin, a polyvinyl alcohol resin, a furfuryl alcohol resin, a polyacrylonitrile resin, a polyamide resin, a phenolic resin, a furan resin, a cellulose resin, a styrene resin, an epoxy resin or vinyl chloride resin, a block copolymer, a polyol, and a polyimide resin, and
the crystalline carbon comprises any one or more selected from the group consisting of natural graphite, artificial graphite, expanded graphite, graphene, carbon black, and a fullerene.

14. The method of claim 12, wherein the forming of the composite is performed by any one or more methods selected from the group consisting of milling, stirring, mixing, and compression.

15. The method of claim 12, wherein in the performing of the heat treatment, the heat treatment is performed at a temperature of 970°C or higher.

16. An electrode comprising the anode active material of any one of claims 1 to 11.

17. A lithium secondary battery comprising:

an anode comprising the anode active material of any one of claims 1 to 11;
a cathode positioned while facing the anode; and
an electrolyte positioned between the cathode and the anode.

METAL NANOPARTICLE

METAL CARBIDE
COATING LAYER

HIGH-CRYSTALLINE
METAL PARTICLE

CONCENTRATION OF CARBON-BASED MATERIAL

FIG. 1

FIG. 2a

FIG. 2b

FIG. 3a

FIG. 3b

FIG. 3c

FIG. 4a

FIG. 4b

## INTERNATIONAL SEARCH REPORT

| International application No. |
| --- |
| **PCT/KR2022/009017** |

| A. | CLASSIFICATION OF SUBJECT MATTER |
| --- | --- |

**H01M 4/36**(2006.01)i; **H01M 4/38**(2006.01)i; **H01M 4/48**(2010.01)i; **H01M 4/58**(2010.01)i; **H01M 4/583**(2010.01)i; **H01M 4/587**(2010.01)i; **H01M 4/62**(2006.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); B82B 1/00(2006.01); B82B 3/00(2006.01); C01B 32/05(2017.01); H01M 10/052(2010.01); H01M 4/1393(2010.01); H01M 4/583(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질 (anode active material), 음극 (negative electrode), 규소 (silicon), 코어 (core), 쉘 (shell), 비정질 (amorphous), 결정질 (crystalline)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2014-0072663 A (SAMSUNG FINE CHEMICALS CO., LTD.) 13 June 2014 (2014-06-13)<br>See abstract; paragraphs [0009] and [0031]-[0035]; claims 1, 4, 6, 8 and 9; and figures 1-2. | 1-17 |
| A | KR 10-1368474 B1 (KNU-INDUSTRY COOPERATION FOUNDATION) 03 March 2014 (2014-03-03)<br>See entire document. | 1-17 |
| A | KR 10-2021-0013748 A (SAMSUNG SDI CO., LTD.) 05 February 2021 (2021-02-05)<br>See entire document. | 1-17 |
| A | KR 10-2013-0005102 A (UNIVERSITY OF ULSAN FOUNDATION FOR INDUSTRY COOPERATION et al.) 15 January 2013 (2013-01-15)<br>See entire document. | 1-17 |
| A | JP 2011-113862 A (HITACHI MAXELL LTD.) 09 June 2011 (2011-06-09)<br>See entire document. | 1-17 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 September 2022** | **30 September 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/009017**

| Patent document cited in search report | | | Publication date (day/month/year) | Patent family member(s) | | | Publication date (day/month/year) |
|---|---|---|---|---|---|---|---|
| KR | 10-2014-0072663 | A | 13 June 2014 | CN | 104736479 | A | 24 June 2015 |
| | | | | CN | 104736479 | B | 09 January 2018 |
| | | | | EP | 2930146 | A1 | 14 October 2015 |
| | | | | EP | 2930146 | A4 | 03 August 2016 |
| | | | | EP | 2930146 | B1 | 09 October 2019 |
| | | | | JP | 2016-506035 | A | 25 February 2016 |
| | | | | JP | 6509124 | B2 | 08 May 2019 |
| | | | | KR | 10-1906973 | B1 | 07 December 2018 |
| | | | | US | 2015-0280223 | A1 | 01 October 2015 |
| | | | | WO | 2014-088187 | A1 | 12 June 2014 |
| KR | 10-1368474 | B1 | 03 March 2014 | KR | 10-2013-0107892 | A | 02 October 2013 |
| KR | 10-2021-0013748 | A | 05 February 2021 | CN | 111628144 | A | 04 September 2020 |
| | | | | EP | 3703163 | A1 | 02 September 2020 |
| | | | | KR | 10-2020-0105402 | A | 07 September 2020 |
| | | | | KR | 10-2211236 | B1 | 02 February 2021 |
| | | | | US | 2020-0280062 | A1 | 03 September 2020 |
| KR | 10-2013-0005102 | A | 15 January 2013 | KR | 10-1442318 | B1 | 25 September 2014 |
| | | | | WO | 2013-005887 | A1 | 10 January 2013 |
| JP | 2011-113862 | A | 09 June 2011 | JP | 5464653 | B2 | 09 April 2014 |

Form PCT/ISA/210 (patent family annex) (July 2019)

**REFERENCES CITED IN THE DESCRIPTION**

**Patent documents cited in the description**

- KR 20180002715

- KR 101666878